# EUROPÄISCHE PATENTANMELDUNG

(11) **EP 3 660 804 A2**
(43) Veröffentlichungstag der Anmeldung: **03.06.2020**
(21) Anmeldenummer: 19205981.4
(22) Anmeldetag: 29.10.2019
(51) Int. Cl.: G08C 17/02, H04Q 9/00

(54) **SYSTEM UND VERFAHREN ZUR ÜBERWACHUNG VON LADUNGSGÜTERN BEIM TRANSPORT AUF EINEM FAHRZEUG**

(30) Priorität: 27.11.2018 DE 102018129914
(71) Anmelder: WABCO GmbH, 30453 Hannover (DE)
(72) Erfinder: BROLL, Niklas, 30952 Ronnenberg (DE); BUCHNER, Dennis, 31157 Sarstedt (DE); PFEFFERKORN, Daniel, 30159 Hannover (DE); WOLF, Thomas, 30890 Barsinghausen (DE)
(74) Vertreter: Ohlendorf, Henrike

(57) **Zusammenfassung**

Die Erfindung betrifft ein System zur Überwachung von Ladungsgütern beim Transport auf einem Fahrzeug (10), wobei das Fahrzeug (10) eine Telematikeinrichtung (16) für die drahtlose Übermittlung von Signalen an einen externen Empfänger (20) aufweist und wenigstens ein Ladungsgut (17) im Fahrzeug mit einer Sendeeinrichtung (19) versehen ist, welche eine Nachricht senden kann, die zumindest eine Kennzeichnung des Ladungsgutes (17) enthält oder Umweltdaten oder beides.

Erfindungsgemäß ist vorgesehen, dass das Fahrzeug (10) eine Empfangseinrichtung (14) aufweist, mit der die von der Sendeeinrichtung (19) gesendete Nachricht empfangen und wenigstens ein Teil der Nachricht an die Telematikeinrichtung (16) übergeben werden kann.

## Beschreibung

Die Erfindung betrifft ein System zur Überwachung von Ladungsgütern beim Transport auf einem Fahrzeug, wobei das Fahrzeug eine Telematikeinrichtung für die drahtlose Übermittlung von Signalen an einen externen Empfänger aufweist und wenigstens ein Ladungsgut im Fahrzeug mit einer Sendeeinrichtung versehen ist, welche eine Nachricht senden kann, die zumindest eine Kennzeichnung des Ladungsgutes enthält oder Umweltdaten oder beides. Die Nachricht soll insbesondere zyklisch oder auf Anforderung gesendet werden. Daneben betrifft die Erfindung ein System zur Lokalisation eines Ladungsgutes in einem Fahrzeug, ein Fahrzeug, ein Verfahren und ein Steuergerät.

Die Überwachung eines Transportfahrzeugs und die damit im Zusammenhang stehende Übermittlung von Daten von einer Telematikeinrichtung des Transportfahrzeugs an einen externen Empfänger ist aus der DE 10 2012 017 531 A1 bekannt.

In der EP 2 660 792 B1 ist die Detektion von Fahrzeugen mit Ladungsgütern im Rahmen eines Verkehrstelematiksystems offenbart. Von den Fahrzeugen und Ladungsgütern mitgeführte OBUs (On-Board-Units) kommunizieren mit einer externen Funkbake. Ziel ist dabei die Feststellung der OBU des Fahrzeugs und der OBU eines Ladungsguts als zusammengehörig. Die OBU des Ladeguts kann auch Ladegutdeklarationen senden.

Hintergrund der vorliegenden Erfindung ist eine angestrebte lückenlose Überwachung von Ladungsgütern beim Transport auf einem Fahrzeug, und zwar vom Beladen bis zum Entladen des Fahrzeugs. Üblicherweise werden die zu transportierenden Ladungsgüter vor und nach dem Transport zumindest kurzzeitig gelagert und dabei erfasst, vorzugsweise in Verbindung mit elektronischen Hilfsmitteln. Eine Verfolgung der Ladungsgüter während des Transports ist unüblich oder schwierig.

Aufgabe der vorliegenden Erfindung ist die Schaffung eines Systems, mit dem eine Überwachung von Ladungsgütern beim Transport auf einem Fahrzeug einfach und günstig möglich ist. Daneben ist es Aufgabe der vorliegenden Erfindung ein Verfahren, ein Fahrzeug und/oder ein Steuergerät für die Überwachung von Ladungsgütern beim Transport auf einem Fahrzeug zu schaffen.

Ein erfindungsgemäßes System weist zur Lösung der Aufgabe die Merkmale des Anspruchs 1 auf. Insbesondere weist das Fahrzeug eine Empfangseinrichtung auf, mit der die von der Sendeeinrichtung gesendete Nachricht empfangen und wenigstens ein Teil der Nachricht an die Telematikeinrichtung übergeben werden kann. Mit dem erfindungsgemäßen System können die von der Sendeeinrichtung am Ladungsgut versendeten Nachrichten mit wenig Energieraufwand und in einem standardisierten Verfahren an den externen Empfänger übersendet werden. Durch die Zwischenschaltung der Empfangseinrichtung im Fahrzeug benötigt die Sendeeinrichtung am Ladungsgut nur wenig Sendeenergie.

Als zu überwachendes Ladungsgut werden ein einzelner Gegenstand oder eine Zusammenfassung mehrerer Gegenstände verstanden, etwa in einer gemeinsamen Transportverpackung, oder ein Transportbehälter mit einem oder mehreren Gegenständen. Handelt es sich bei dem zu überwachenden Ladungsgut um einen Gegenstand oder um eine Zusammenfassung mehrerer Gegenstände, kann die Sendeeinrichtung am Gegenstand, an einem der Gegenstände, an der Transportverpackung oder am Transportbehälter angeordnet sein.

Die Sendeeinrichtung arbeitet vorzugsweise mit einer größeren Reichweite als die bekannte RFID-Technologie. Angestrebt ist eine Reichweite zur Abdeckung der möglichen Entfernungen innerhalb eines Zugfahrzeugs oder Anhängers oder sogar vom Anhänger zum Zugfahrzeug oder umgekehrt, also im Bereich 1 bis 40 Meter. Bevorzugt wird mit einer Trägerfrequenz um 2,45 GHz oder höher gesendet. Grundsätzlich verwendbar sind alle Funktechnologien, mit denen die genannte Entfernung überbrückbar ist, also auch WLAN (Wi-Fi), RFID, Bluetooth, DSRC (Dedicated Short Range Communication = Funkstandard im Zusammenhang mit der LKW-Maut in Deutschland).

Bei der Kennzeichnung des Ladungsgutes handelt es sich vorzugsweise um eine eindeutige Kennzeichnung zur Identifizierung des Ladungsgutes. Handelt es sich bei dem zu überwachenden Ladungsgut um eine Zusammenfassung mehrerer Gegenstände, kann die Kennzeichnung Hinweise auf die einzelnen Gegenstände enthalten. Umweltdaten sind beispielsweise alle in der Nachbarschaft der Sendeeinrichtung messbaren Zustände, etwa Druck, Temperatur, Uhrzeit, Beschleunigung oder Feuchtigkeit. Dabei können sich diese Daten auch auf die Ladungsgüter oder das Innere von Verpackungen beziehen. Die Sendeeinrichtung kann hierfür mit entsprechenden Sensoren versehen sein.

Die erfindungsgemäß vorgesehene Empfangseinrichtung ist vorzugweise derart ausgebildet, dass die von der Sendeeinrichtung gesendeten Nachrichten empfangen und ganz oder teilweise an die Telematikeinrichtung übergeben werden können. Die Telematikeinrichtung kann die Nachricht oder einen Teil derselben an einen externen Empfänger übersenden. Vorzugsweise nutzt die Telematikeinrichtung ein Mobilfunknetz, insbesondere GSM (2G), UMTS (3G), LTE (4G), 5G und/oder Nachfolger oder Abwandlungen hiervon.

Die Sendeeinrichtung am Ladungsgut ist vorzugsweise mit einer Batterie als Energiequelle ausgestattet. Demgegenüber ist die Empfangseinrichtung vorzugsweise an die Energieversorgung des Fahrzeugs (Bordnetz) angeschlossen.

Nach einem weiteren Gedanken der Erfindung kann es sich bei der Sendeeinrichtung am Ladungsgut um ein BLE-Beacon handeln. BLE bedeutet Bluetooth Low Energy. Geräte für diese Funktechnik sind kostengünstig verfügbar und senden im 2,4-GHz-Bereich. Beacons sind Sendevorrichtungen, die permanent oder in Abständen Signale senden, insbesondere zumindest eine individuelle Kennung zur Identifizierung des Senders. BLE-Beacons sind Sendevorrichtungen, die an BLE angepasst sind. Die Signale der BLE-Beacons werden als Beacon-Messages bezeichnet. Passende Empfangseinrichtungen hierfür sind ebenfalls kostengünstig verfügbar.

Nach einem weiteren Gedanken der Erfindung kann vorgesehen sein, dass die Sendeeinrichtung am Ladungsgut auch Empfangseinrichtung ist, dass im Fahrzeug mit Abstand zueinander wenigstens zwei Sendeeinrichtungen vorgesehen sind, die Signale senden, welche von der Sendeeinrichtung am Ladungsgut empfangen werden, und dass die Sendeeinrichtung am Ladungsgut die Signale oder daraus abgeleitete Informationen an die Empfangseinrichtung am Fahrzeug übersendet. Mittels der beiden Sendeeinrichtungen im Fahrzeug und dem Empfang der gesendeten Signale durch die Sendeeinrichtung am Ladungsgut können zusätzliche Daten generiert und übertragen werden, etwa Daten zur Positionsbestimmung des Ladungsgutes im Fahrzeug.

Nach einem weiteren Gedanken der Erfindung kann vorgesehen sein, dass die wenigstens zwei Sendeeinrichtungen im Fahrzeug auf wenigstens eine der nachfolgenden Arten angeordnet sind:
- innen im Fahrzeug an einer Fahrzeugoberseite,
- vorn und hinten im Fahrzeug,
- an Seitenwänden oben im Fahrzeug,
- einander diagonal gegenüberliegend, bezogen auf eine Längsrichtung des Fahrzeugs.

Vorzugsweise sind zwei Sendeeinrichtungen oben vorn und oben hinten im Fahrzeug vorgesehen, insbesondere einander diagonal gegenüberliegend oder jeweils mittig. Dies erleichtert eine Lokalisation des Ladungsgutes anhand der Signale der Sendeeinrichtungen im Fahrzeug.

Nach einem weiteren Gedanken der Erfindung können die wenigstens zwei Sendeeinrichtungen im Fahrzeug Signale mit gleicher Signalstärke abstrahlen. Die auch zum Empfang vorgesehene Sendeeinrichtung am Ladungsgut empfängt je nach Position im Fahrzeug Signale mit unterschiedlich hoher Empfangsstärke. Aus diesen Signalen kann die Position des Ladungsgutes berechnet werden.

Gemäß einem weiteren Gedanken der Erfindung können die wenigstens zwei Sendeeinrichtungen im Fahrzeug BLE-Beacons sein. Reichweite und Energiebedarf sind für das Fahrzeug vorteilhaft. Geräte für die BLE-Funktechnik sind kostengünstig verfügbar.

Gemäß einem weiteren Gedanken der Erfindung können die Empfangseinrichtung und die Telematikeinrichtung zumindest auf eine der folgenden Arten miteinander kommunizieren:
- drahtlos,
- per Funk,
- über optische Signale,
- leitungsgebunden,
- über ein Datenbussystem.

Vorzugsweise erfolgt die Kommunikation leitungsgebunden über ein Datenbussystem.

Gemäß einem weiteren Gedanken der Erfindung können Empfangseinrichtung und Telematikeinrichtung in einem Gerät integriert sein. Eine besondere Kommunikation zwischen den beiden Einrichtungen über mehrere Meter kann dann entfallen.

Nach einem weiteren Gedanken der Erfindung kann es sich bei dem Fahrzeug um ein Straßenfahrzeug handeln, nämlich ein Zugfahrzeug, einen Anhänger oder einen Lastzug mit Zugfahrzeug und wenigstens einem Anhänger. Der Anhänger kann auch ein Auflieger sein.

Nach einem weiteren Gedanken der Erfindung können die Telematikeinrichtung im Zugfahrzeug und die Empfangseinrichtung im Zugfahrzeug oder im Anhänger vorgesehen sein, sofern das Fahrzeug ein Lastzug ist. Alternativ können die Telematikeinrichtung im Anhänger und die Empfangseinrichtung im Zugfahrzeug oder im Anhänger vorgesehen sein.

Ein erfindungsgemäßes System zur Lokalisation eines Ladungsgutes in einem Fahrzeug weist folgende Merkmale auf:
a) das Ladungsgut weist eine Sendeeinrichtung auf, mit der auch Signale empfangen werden können,
b) das Fahrzeug weist wenigstens zwei Sendeeinrichtungen auf, mit denen Signale gesendet werden können,
c) die Sendeeinrichtung am Ladungsgut kann die Signale empfangen,
d) die Sendeeinrichtung am Ladungsgut kann aus den Signalen eine Position des Ladungsgutes im Fahrzeug berechnen und die Position an eine Empfangseinrichtung im Fahrzeug senden, oder die Sendeeinrichtung am Ladungsgut kann die Signale oder daraus abgeleitete Daten an die Empfangseinrichtung im Fahrzeug senden und die Empfangseinrichtung oder ein Steuergerät können die Position des Ladungsgutes im Fahrzeug berechnen.

Mit dem System kann unter Verwendung weniger und kostengünstiger Komponenten die Position eines Ladungsgutes im Fahrzeug berechnet und einer Empfangseinrichtung im Fahrzeug zur Verfügung gestellt werden. Von den wenigstens zwei Sendeeinrichtungen im Fahrzeug kann eine zugleich die Empfangseinrichtung sein.

Gegenstand der Erfindung ist auch ein Fahrzeug für ein System nach einem der Ansprüche 1 bis 12, mit einer Telematikeinrichtung für die drahtlose Übermittlung von Signalen an einen externen Empfänger und mit einer Empfangseinrichtung für den Empfang einer Nachricht aus dem Fahrzeug, wobei die Empfangseinrichtung wenigstens einen Teil der Nachricht an die Telematikeinrichtung übergeben kann.

Nach einem weiteren Gedanken der Erfindung kann das Fahrzeug wenigstens zwei Sendeeinrichtungen zur Übersendung von Signalen an einen Empfänger innerhalb des Fahrzeugs aufweisen. Bei dem Empfänger handelt es sich vorzugsweise um einen mit einem zu transportierenden Ladungsgut gekoppelten Empfänger, welcher zugleich Sendeeinrichtung ist.

Gegenstand der Erfindung ist auch ein Verfahren zum Überwachen von Ladungsgütern beim Transport auf einem Fahrzeug, wobei das Fahrzeug eine Telematikeinrichtung für die drahtlose Übermittlung von Signalen an einen externen Empfänger aufweist, und wenigstens ein Ladungsgut im Fahrzeug mit einer Sendeeinrichtung versehen ist, welche eine Nachricht senden kann, die zumindest eine Kennzeichnung des Ladungsgutes enthält oder Umweltdaten oder beides. Erfindungsgemäß empfängt die Empfangseinrichtung im Fahrzeug die Nachricht und übermittelt wenigstens einen Teil der Nachricht an die Telematikeinrichtung. Die Telematikeinrichtung übersendet wenigstens einen Teil der Nachricht an den externen Empfänger.

Nach einem weiteren Gedanken der Erfindung können in wenigstens einer der beiden Einrichtungen - Telematikeinrichtung, Empfangseinrichtung - Informationen über das Ladungsgut abgespeichert sein. Die abgespeicherten Informationen können mit der Nachricht abgeglichen oder verknüpft werden. Das Ergebnis des Abgleichs oder der Verknüpfung kann von der Telematikeinrichtung an den externen Empfänger übersendet werden.

Bei der abgespeicherten Information handelt es sich vorzugsweise um eine Liste mit Kennzeichnungen der Ladungsgüter, die im Fahrzeug vorhanden sein sollten. Aus dem Abgleich der Information mit der Nachricht ergibt sich, ob das jeweilige Ladungsgut tatsächlich auf dem Fahrzeug vorhanden ist. Das Ergebnis des Abgleichs wird über die Telematikeinrichtung dem externen Empfänger zur Verfügung gestellt, sodass dieser zeitnah erkennen kann, ob das zum Transport vorgesehene Ladungsgut tatsächlich auf dem Fahrzeug vorhanden ist.

Nach einem weiteren Gedanken der Erfindung können wenigstens zwei Sendeeinrichtungen im Fahrzeug Signale senden, welche von der Sendeeinrichtung am Ladungsgut empfangen werden. Die Sendeeinrichtung am Ladungsgut kann die Signale oder daraus abgeleitete Informationen an die Empfangseinrichtung im Fahrzeug übersenden.

Nach einem weiteren Gedanken der Erfindung können die wenigstens zwei Sendeeinrichtungen im Fahrzeug Signale gleicher Stärke senden. Aus den von der Sendeeinrichtung am Ladungsgut empfangenen Signalstärken wird ein Standort des Ladungsgutes im Fahrzeug berechnet.

Nach einem weiteren Gedanken der Erfindung kann vorgesehen sein, dass der Standort des Ladungsgutes im Fahrzeug berechnet wird, nämlich von der Sendeeinrichtung am Ladungsgut oder von der Empfangseinrichtung oder von einem Steuergerät.

Gegenstand der Erfindung ist auch ein Verfahren zur Lokalisation eines Ladungsgutes in einem Fahrzeug, wobei das Ladungsgut eine Sendeeinrichtung aufweist, mit der auch Signale empfangen werden können, und wobei das Fahrzeug wenigstens zwei Sendeeinrichtungen aufweist. Das Verfahren beinhaltet vorzugsweise folgende Schritte:
a) die Sendeeinrichtungen im Fahrzeug senden Signale, welche von der Sendeeinrichtung am Ladungsgut empfangen werden,
b) die Sendeeinrichtung am Ladungsgut berechnet aus den empfangenen Signalen eine Position des Ladungsgutes im Fahrzeug und sendet die Position an eine Empfangseinrichtung im Fahrzeug, oder die Sendeeinrichtung am Ladungsgut sendet die Signale oder daraus abgeleitete Daten an die Empfangseinrichtung im Fahrzeug und die Empfangseinrichtung oder ein Steuergerät berechnen die Position des Ladungsgutes im Fahrzeug.

Nach einem weiteren Gedanken der Erfindung können die wenigstens zwei Sendeeinrichtungen im Fahrzeug Signale gleicher Stärke senden. Aus den von der Sendeeinrichtung am Ladungsgut empfangenen Signalstärken wird ein Standort des Ladungsgutes im Fahrzeug berechnet.

Gegenstand der Erfindung ist auch ein Steuergerät mit Empfangseinrichtung, eingerichtet zur Durchführung des Verfahrens nach einem der Ansprüche 15 bis 21 und mit einer Schnittstelle zur Kommunikation mit einer Telematikeinrichtung. Die Telematikeinrichtung kann die in der Empfangseinrichtung oder im Steuergerät vorliegenden Daten oder Teile davon an einen externen Empfänger übersenden. Die Empfangseinrichtung ist vorzugsweise für den Empfang von Beacon-Messages geeignet.

Weitere Merkmale der Erfindung ergeben sich aus der Beschreibung im Übrigen und aus den Patentansprüchen. Vorteilhafte Ausführungsformen der Erfindung werden nachfolgend anhand von Zeichnungen erläutert. Es zeigen:
- Fig. 1: ein Transportfahrzeug mit der Übermittlung von Signalen von einem Ladungsgut im Fahrzeug über eine Empfangseinrichtung und eine Telematikeinrichtung bis zu einem externen Empfänger,
- Fig. 2: das Fahrzeug gemäß Fig. 1 mit zwei zusätzlichen Sendeeinrichtungen im Fahrzeug zur Lokalisierung des Ladungsgutes.

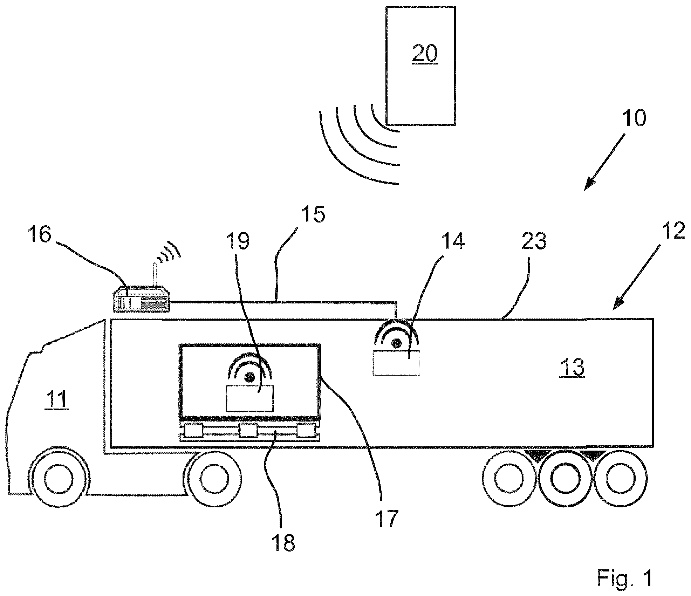

In Fig. 1 dargestellt ist ein Transportfahrzeug 10, hier bestehend aus einem Zugfahrzeug 11 und einem Auflieger als Anhänger 12. Der Anhänger 12 weist einen Laderaum 13 auf, der insbesondere in Fahrtrichtung hinten oder seitlich öffenbar ist.

Am oder im Laderaum 13 ist vorzugsweise oben mittig eine Empfangseinrichtung 14 angeordnet, welche ein elektronisches Steuergerät (ECU) enthält und über eine Datenleitung 15 mit einer Telematikeinrichtung 16 verbunden ist. Letztere befindet sich am oder im Anhänger 12.

Als Frachtgut ist im Laderaum 13 beispielhaft ein Behälter 17 auf einer Palette 18 gezeigt. Im oder am Behälter 17 ist ein Beacon als Sendeeinrichtung 19 angeordnet. Das Beacon weist eine eindeutige Kennzeichnung, etwa eine Nummer zur Identifizierung, sowie Sensoren für Temperatur und Feuchtigkeit auf. Kennzeichnung, Temperatur, Feuchtigkeit und Zeitpunkt der Messung (von Temperatur und Feuchtigkeit) übersendet die Sendeeinrichtung 19 zyklisch, sodass die gesendeten Daten von der Empfangseinrichtung 14 empfangbar sind. Bei dem Beacon handelt es sich um ein BLE-Beacon, welches im 2,4 GHz-Bereich sendet. Die genannten Daten werden beispielsweise alle zehn Sekunden oder alle fünf Minuten gesendet oder in einem dazwischenliegenden Abstand. Die Empfangseinrichtung 14 empfängt die gesendeten Daten.

Die Empfangseinrichtung 14 kann einen Speicher aufweisen, in dem Informationen über den Behälter 17 als Frachtgut abgelegt sind, insbesondere die eindeutige Kennzeichnung. Dadurch kann bereits innerhalb der Empfangseinrichtung 14 durch Vergleich mit den von der Sendeeinrichtung 19 empfangenen Daten eine Prüfung stattfinden, ob sich der Behälter 17 überhaupt im Anhänger 12 befindet.

Die von der Sendeeinrichtung 19 übersandte Nachricht oder eine daraus abgeleitete Nachricht werden von der Empfangseinrichtung 14 über die Datenleitung 15 an die Telematikeinrichtung 16 weitergeleitet. Die Telematikeinrichtung 16 übermittelt per Mobilfunk die erhaltene Nachricht oder eine daraus abgeleitete Nachricht an einen externen Empfänger 20, etwa einen Server, welcher mit einem Internet-Portal eines Fahrzeugflotten-Betreibers in Verbindung steht. Der Fahrzeugflotten-Betreiber kann über das Portal die für ihn relevanten Daten überprüfen und abfragen.

Die Sendeeinrichtung 19 ist mit einem eigenen, autonomen Energiespeicher ausgestattet, etwa mit einer Batterie. Empfangseinrichtung 14 und Telematikeinrichtung 16 sind vorzugsweise an ein Bordnetz des Anhängers 12 angeschlossen.

Im vorliegenden Beispiel sind Empfangseinrichtung 14 und Telematikeinrichtung 16 im oder am Anhänger 12 vorgesehen. Insbesondere die Telematikeinrichtung 16 kann auch am oder im Zugfahrzeug 11 angeordnet sein. Die Kommunikation zwischen Empfangseinrichtung 14 und Telematikeinrichtung 16 würde in dem Fall vorzugsweise per Funk stattfinden, etwa über ein WLAN oder mittels BLE (Bluetooth Low Energy).

Empfangseinrichtung 14 und Telematikeinrichtung 16 arbeiten vorzugsweise bidirektional. Eine gegebenenfalls in der Empfangseinrichtung 14 abgelegte Liste mit im Anhänger 12 zu transportierenden Ladungsgütern (Soll-Liste) kann so von einem externen Sender (Empfänger 20) über die Telematikeinrichtung 16 an die Empfangseinrichtung 14 übermittelt werden.

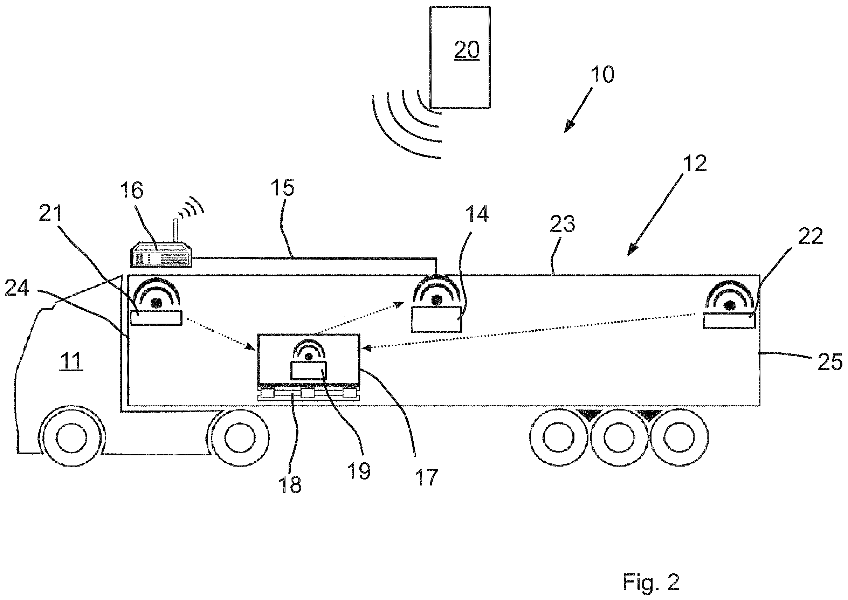

In Fig. 2 ist ein Ausführungsbeispiel mit erweiterten Funktionen dargestellt. Zusätzlich zur Empfangseinrichtung 14 sind im Anhänger 12 zwei Sendeeinrichtungen 21, 22 vorgesehen. Diese sind hier sogenannte Beacons und unter einem Anhängerdach 23 gehalten, nämlich dicht an Vorderwand 24 und Rückwand 25.

Die Sendeeinrichtung 19 ist hier zum Empfang und zur Auswertung von Signalen der Sendeeinrichtungen 21, 22 eingerichtet. Letztere senden mit gleicher Sendeleistung Signale. Die Sendeeinrichtung 19 empfängt die Signale, misst deren Signalstärken und berechnet daraus eine eigene Position innerhalb des Anhängers 12. Die Position wird zusammen mit weiteren Daten an die Empfangseinrichtung 14 übermittelt.

Anstelle des Behälters 17 kann eine nicht gezeigte Maschine oder eine andere Ware mit der Sendeeinrichtung 19 im Anhänger 12 transportiert werden, mit oder ohne Palette 18 oder andere Verpackungsmittel.

Die Berechnung der Position des Behälters 17 im Anhänger kann auch in der Empfangseinrichtung 14 oder beim externen Empfänger 20 durchgeführt werden. In diesem Fall übersendet die Sendeeinrichtung 19 nicht die Position, sondern nur Informationen über die empfangenen Signalstärken.

Zusätzlich zu den Sendeeinrichtungen 21, 22 können im Anhänger 12 weitere Sendeeinrichtungen vorgesehen sein, um die Genauigkeit der Positionsbestimmung zu verbessern.

Die Übersendung der Informationen über die Signalstärken kann auch getrennt von den übrigen Daten erfolgen, insbesondere sofern von der Sendeeinrichtung 19 die Position berechnet wird.

### Bezugszeichenliste (Teil der Beschreibung)

- 10: Transportfahrzeug
- 11: Zugfahrzeug
- 12: Anhänger
- 13: Laderaum
- 14: Empfangseinrichtung
- 15: Datenleitung
- 16: Telematikeinrichtung
- 17: Behälter
- 18: Palette
- 19: Sendeeinrichtung
- 20: externer Empfänger
- 21: Sendeeinrichtung
- 22: Sendeeinrichtung
- 23: Anhängerdach
- 24: Vorderwand
- 25: Rückwand

## Patentansprüche

1. System zur Überwachung von Ladungsgütern beim Transport auf einem Fahrzeug (10), wobei das Fahrzeug (10) eine Telematikeinrichtung (16) für die drahtlose Übermittlung von Signalen an einen externen Empfänger (20) aufweist und wenigstens ein Ladungsgut (17) im Fahrzeug mit einer Sendeeinrichtung (19) versehen ist, welche eine Nachricht senden kann, die zumindest eine Kennzeichnung des Ladungsgutes (17) enthält oder Umweltdaten oder beides, **dadurch gekennzeichnet, dass** das Fahrzeug (10) eine Empfangseinrichtung (14) aufweist, mit der die von der Sendeeinrichtung (19) gesendete Nachricht empfangen und wenigstens ein Teil der Nachricht an die Telematikeinrichtung (16) übergeben werden kann.

2. System nach Anspruch 1, **dadurch gekennzeichnet, dass** die Sendeeinrichtung (19) am Ladungsgut (17) ein BLE-Beacon ist.

3. System nach Anspruch 1 oder 2, **dadurch gekennzeichnet, dass** die Sendeeinrichtung (19) am Ladungsgut (17) auch Empfangseinrichtung ist, dass im Fahrzeug (10) mit Abstand zueinander wenigstens zwei Sendeeinrichtungen (21, 22) vorgesehen sind, die Signale senden, welche von der Sendeeinrichtung (19) am Ladungsgut (17) empfangen werden, und dass die Sendeeinrichtung (19) am Ladungsgut (17) die Signale oder daraus abgeleitete Informationen an die Empfangseinrichtung (14) am Fahrzeug (10) übersendet.

4. System nach Anspruch 3, **dadurch gekennzeichnet, dass** die wenigstens zwei Sendeeinrichtungen (21, 22) im Fahrzeug (10) auf wenigstens eine der nachfolgenden Arten angeordnet sind:
- innen im Fahrzeug (10) an einer Fahrzeugoberseite,
- vorn und hinten im Fahrzeug (10),
- an Seitenwänden oben im Fahrzeug (10),
- einander diagonal gegenüberliegend, bezogen auf eine Längsrichtung des Fahrzeugs (10).

5. System nach Anspruch 3 oder 4, **dadurch gekennzeichnet, dass** die wenigstens zwei Sendeeinrichtungen (21, 22) im Fahrzeug (10) Signale mit gleicher Signalstärke abstrahlen.

6. System nach einem der Ansprüche 3 bis 5, **dadurch gekennzeichnet, dass** die wenigstens zwei Sendeeinrichtungen (21, 22) im Fahrzeug (10) BLE-Beacons sind.

7. System nach einem der Ansprüche 1 bis 6, **dadurch gekennzeichnet, dass** die Empfangseinrichtung (14) und die Telematikeinrichtung (16) zumindest auf eine der folgenden Arten miteinander kommunizieren:
- drahtlos,
- per Funk,
- über optische Signale,
- leitungsgebunden,
- über ein Datenbussystem (15).

8. System nach einem der Ansprüche 1 bis 7, **dadurch gekennzeichnet, dass** Empfangseinrichtung (14) und Telematikeinrichtung (16) in einem Gerät integriert sind.

9. System nach einem der Ansprüche 1 bis 8, **dadurch gekennzeichnet, dass** das Fahrzeug (10) ein Straßenfahrzeug ist, nämlich ein Zugfahrzeug (11), ein Anhänger (12) oder ein Lastzug mit Zugfahrzeug (11) und wenigstens einem Anhänger (12).

10. System nach Anspruch 9, **dadurch gekennzeichnet, dass**, sofern das Fahrzeug (10) ein Lastzug ist, die Telematikeinrichtung (16) im Zugfahrzeug (11) vorgesehen ist und die Empfangseinrichtung (14) im Zugfahrzeug (11) oder im Anhänger (12).

11. System nach Anspruch 9, **dadurch gekennzeichnet, dass**, sofern das Fahrzeug (10) ein Lastzug ist, die Telematikeinrichtung (16) im Anhänger (12) vorgesehen ist und die Empfangseinrichtung (14) im Zugfahrzeug (11) oder im Anhänger (12).

12. System zur Lokalisation eines Ladungsgutes (17) in einem Fahrzeug (10), mit folgenden Merkmalen:
a) das Ladungsgut (17) weist eine Sendeeinrichtung (19) auf, mit der auch Signale empfangen werden können,
b) das Fahrzeug (10) weist wenigstens zwei Sendeeinrichtungen (21, 22) auf, mit denen Signale gesendet werden können,
c) die Sendeeinrichtung (19) am Ladungsgut (17) kann die Signale empfangen,
d) die Sendeeinrichtung (19) am Ladungsgut (17) kann aus den Signalen eine Position des Ladungsgutes (17) im Fahrzeug (10) berechnen und die Position an eine Empfangseinrichtung (14) im Fahrzeug senden,
oder die Sendeeinrichtung (19) am Ladungsgut (17) kann die Signale oder daraus abgeleitete Daten an die Empfangseinrichtung (14) im Fahrzeug (10) senden und die Empfangseinrichtung (14) oder ein Steuergerät können die Position des Ladungsgutes (17) im Fahrzeug (10) berechnen.

13. Fahrzeug (10) für ein System nach einem der Ansprüche 1 bis 12, mit einer Telematikeinrichtung (16) für die drahtlose Übermittlung von Signalen an einen externen Empfänger (20), und mit einer Empfangseinrichtung (14) für den Empfang einer Nachricht aus dem Fahrzeug (10), wobei die Empfangseinrichtung (14) wenigstens einen Teil der Nachricht an die Telematikeinrichtung (16) übergeben kann.

14. Fahrzeug (10) nach Anspruch 13, **gekennzeichnet durch** wenigstens zwei Sendeeinrichtungen (21, 22) zur Übersendung von Signalen an einen Empfänger im Fahrzeug (10).

15. Verfahren zum Überwachen von Ladungsgütern (17) beim Transport auf einem Fahrzeug (10), wobei das Fahrzeug (10) eine Telematikeinrichtung (16) für die drahtlose Übermittlung von Signalen an einen externen Empfänger (20) aufweist, und wenigstens ein Ladungsgut (17) im Fahrzeug mit einer Sendeeinrichtung (19) versehen ist, welche eine Nachricht senden kann, die zumindest eine Kennzeichnung des Ladungsgutes (17) enthält oder Umweltdaten oder beides,
**dadurch gekennzeichnet, dass** eine Empfangseinrichtung (14) im Fahrzeug (10) die Nachricht empfängt und wenigstens einen Teil der Nachricht an die Telematikeinrichtung (16) übermittelt, und dass die Telematikeinrichtung (16) wenigstens einen Teil der Nachricht an den externen Empfänger (20) übersendet.

16. Verfahren nach Anspruch 15, **dadurch gekennzeichnet, dass** in wenigstens einer der beiden Einrichtungen - Telematikeinrichtung (16), Empfangseinrichtung (14) - Informationen über das Ladungsgut (17) abgespeichert sind, dass die abgespeicherten Informationen mit der Nachricht abgeglichen oder verknüpft werden, und dass ein Ergebnis des Abgleichs oder der Verknüpfung von der Telematikeinrichtung (16) an den externen Empfänger (20) übersendet wird.

17. Verfahren nach Anspruch 15 oder 16, **dadurch gekennzeichnet, dass** wenigstens zwei Sendeeinrichtungen (21, 22) im Fahrzeug (10) Signale senden, welche von der Sendeeinrichtung (19) am Ladungsgut (17) empfangen werden, und dass die Sendeeinrichtung (19) am Ladungsgut (17) die Signale oder daraus abgeleitete Informationen an die Empfangseinrichtung (14) im Fahrzeug (10) übersendet.

18. Verfahren nach Anspruch 17, **dadurch gekennzeichnet, dass** die wenigstens zwei Sendeeinrichtungen (21, 22) im Fahrzeug (10) Signale gleicher Stärke senden und dass aus den von der Sendeeinrichtung (19) am Ladungsgut (17) empfangenen Signalstärken ein Standort des Ladungsgutes (17) im Fahrzeug (10) berechnet wird.

19. Verfahren nach Anspruch 18, **dadurch gekennzeichnet, dass** der Standort des Ladungsgutes (17) im Fahrzeug (10) berechnet wird, nämlich von der Sendeeinrichtung (19) am Ladungsgut (17) oder von der Empfangseinrichtung (14) oder von einem Steuergerät.

20. Verfahren zur Lokalisation eines Ladungsgutes (17) in einem Fahrzeug (10),
wobei das Ladungsgut (17) eine Sendeeinrichtung (19) aufweist, mit der auch Signale empfangen werden können,
und wobei das Fahrzeug wenigstens zwei Sendeeinrichtungen (21, 22) aufweist,
mit folgenden Schritten:
a) die Sendeeinrichtungen (21, 22) im Fahrzeug senden Signale, welche von der Sendeeinrichtung (19) am Ladungsgut (17) empfangen werden,
b) die Sendeeinrichtung (19) am Ladungsgut (17) berechnet aus den empfangenen Signalen eine Position des Ladungsgutes (17) im Fahrzeug (10) und sendet die Position an eine Empfangseinrichtung (14) im Fahrzeug,
oder die Sendeeinrichtung (19) am Ladungsgut (17) sendet die Signale oder daraus abgeleitete Daten an die Empfangseinrichtung (14) im Fahrzeug (10) und die Empfangseinrichtung (14) oder ein Steuergerät berechnen die Position des Ladungsgutes (17) im Fahrzeug (10).

21. Verfahren nach Anspruch 20, **dadurch gekennzeichnet, dass** die wenigstens zwei Sendeeinrichtungen (21, 22) im Fahrzeug (10) Signale gleicher Stärke senden und dass aus den von der Sendeeinrichtung (19) am Ladungsgut (17) empfangenen Signalstärken ein Standort des Ladungsgutes (17) im Fahrzeug (10) berechnet wird.

22. Steuergerät mit Empfangseinrichtung (14), eingerichtet zur Durchführung des Verfahrens nach einem der Ansprüche 22 bis 28 und mit einer Schnittstelle (15) zur Kommunikation mit einer Telematikeinrichtung (16).
